# FASCICULE DE BREVET EUROPEEN

(11) **EP 2 367 891 B1**
(45) Date de publication et mention de la délivrance du brevet: **14.09.2016**
(21) Numéro de dépôt: 09797104.8
(22) Date de dépôt: 26.11.2009
(51) Int. Cl.: C09J 5/06, C09J 11/08

(54) **COMPOSITION DE PARTICULES THERMOFUSIBLES AUTO-AGRIPPANTES ET PROCEDE DE COLLAGE METTANT EN OEUVRE UNE TELLE COMPOSITION**
SELBSTHAFTENDE HEISSSCHMELZENDE PARTIKELZUSAMMENSETZUNG UND KLEBEVERFAHREN BEI DEM DIESE ZUSAMMENSETZUNG ZUM EINSATZ KOMMT
COMPOSITION OF HOT-MELT, SELF-ADHESIVE PARTICLES AND STICKING METHOD USING SAME

(30) Priorité: 28.11.2008 FR 0806699
(43) Date de publication de la demande: 28.09.2011
(73) Titulaire: C-Gex System's, 82350 Albias (FR)
(72) Inventeur: GUILHEM, Christian, F-82350 Albias (FR)
(74) Mandataire: Cabinet BARRE LAFORGUE & associés
(86) Numéro de dépôt international: PCT/FR2009/052317
(87) Numéro de publication internationale: WO 2010/061144

(56) Documents cités:
- EP-A- 0 565 394
- WO-A-2007/017467
- FR-A- 2 889 617

## Description

L'invention concerne une composition de collage adaptée pour le collage à chaud de pièces, et plus particulièrement pour le collage d'un revêtement souple, par exemple textile, sur un support, ainsi qu'un procédé de collage mettant en oeuvre une telle composition de collage.

Dans tout le texte, on désigne par « poudre » toute composition de particules solides à l'état divisé.

On connaît, par exemple du document EP 0 350 979, des procédés de collage d'un revêtement souple sur un support, dans lesquels on enduit au moins l'une des faces à coller du revêtement et/ou du support avec une colle thermo-activable, puis on met en regard les pièces à coller et on les presse l'une contre l'autre tout en les chauffant. Sous l'effet de la température, la colle s'active, c'est-à-dire devient collante et fixe l'une à l'autre les deux pièces à coller.

Il est courant d'employer dans un tel procédé une colle qui a été préalablement pulvérisée sur une face de l'une des pièces, comme par exemple décrit dans le document FR 2 758 828. Les colles connues, adaptées pour un tel usage, sont en général des colles à solvants ou des colles composées de particules de polymères thermoplastiques en dispersion dans de l'eau.

Ces colles présentent de nombreux inconvénients. Par exemple, les colles à solvants génèrent des émanations toxiques lors de leur mise en oeuvre. Les colles à l'eau comportent au moins 50% de leur poids en eau, eau qui ne joue aucun rôle technique pour le collage mais qui introduit des surcoûts non négligeables lors du transport et rend ces colles susceptibles de geler, ce qui impose des précautions particulières lors de leur transport et de leur stockage. En outre, de telles colles, une fois pulvérisées sur les pièces à coller, doivent subir une opération de séchage pour les rendre manipulables avant l'opération suivante de mise en place des pièces.

Par ailleurs, si l'on connaît des colles thermofusibles sous forme de poudre sèche, leur mise en oeuvre, comme montré par le document FR 2 745 595, nécessite une première étape d'encollage du support avec une couche de colle de l'un des types précédents pour maintenir la poudre sur le support, et n'est guère utilisable que pour des productions de produits en bande.

Il existe donc un besoin pour une colle qui ne présente pas les inconvénients cités des colles connues.

L'invention vise donc une composition de collage permettant son application à sec, sans emploi de solvant ou de dispersant, sur toutes surfaces, y compris les surfaces fibreuses non préalablement encollées.

L'invention vise aussi une composition de collage permettant un collage en surface des pièces en regard, avec une pénétration réduite dans l'épaisseur des pièces, et une conservation de la souplesse des pièces collées.

L'invention vise en outre une telle composition de collage qui permette un réglage de la force du collage, ainsi que de sa répartition spatiale sur la surface à coller.

L'invention vise également une composition de collage qui puisse être mise en oeuvre avec des moyens économiques.

L'invention vise également un procédé de collage mettant en oeuvre une telle composition, qui permette un collage sélectif sur des surfaces de forme prédéterminée.

Pour ce faire, l'invention concerne une composition de collage comprenant des particules, dites particules thermofusibles auto-agrippantes, formées dans une matière choisie dans le groupe des colles thermofusibles (c'est-à-dire thermoplastiques fusibles ou encore thermoréactivables) et présentant des pointes et/ou des barbelures propres à s'accrocher en surface d'au moins une pièce à coller.

Les particules d'une composition selon l'invention sont en particulier avantageusement formées d'une matière solide à température ambiante et apte à faire office de colle thermofusible adaptée pour le collage de pièces souples, notamment tissus, feutres et mousses, présentant une surface fibreuse sur au moins une de leurs faces.

Les particules d'une composition de collage selon l'invention présentent par ailleurs des pointes et/ou des barbelures propres à pénétrer et s'accrocher dans les fibres d'une face d'une telle pièce souple. A noter cependant que les particules d'une composition de collage selon l'invention peuvent également s'accrocher dans une couche pâteuse et/ou adhérente présente en surface de l'une des pièces à coller, lorsque celle-ci n'est pas fibreuse.

Ainsi, en répandant -notamment par projection- cette composition de collage selon l'invention sur la surface fibreuse d'une pièce à coller, les particules de colle, dans leur état solide, s'accrochent par leurs barbelures aux fibres sur lesquelles elles ont été déposées. Les particules de colle restent en place sur la surface et résistent aux manipulations ce qui permet d'éliminer d'éventuelles opérations de séchage comme c'est le cas avec des colles sous forme liquide. En outre, les particules de colle, ainsi employées à sec, forment une pluralité de points de colle indépendants les uns des autres et non, comme avec les colles liquides ou pâteuses, une surface continue. L'élasticité des pièces ainsi encollées, particulièrement dans le cas de tissus fins, est préservée et l'aspect cartonné obtenu avec les colles connues peut être évité. De plus, les pièces à coller, que ce soient le support ou le revêtement, peuvent être stockées sans autre précaution que, le cas échéant, l'interposition d'un intercalaire non fibreux pour éviter l'accrochage des pièces entre elles, puisque la colle est toujours dans son état initial.

Avantageusement et selon l'invention, les particules sont formées de tronçons de fils présentant un facteur de forme entre leur longueur et la plus grande dimension de leur section compris entre 4 et 40. Le diamètre moyen des tronçons de fils est compris entre 0,05 mm et 1 mm, et préférentiellement entre 0,1 mm et 0,5 mm.

Cette forme très simple de composition de particules thermofusibles auto-agrippantes montre cependant une grande capacité à pénétrer dans les fibres et à s'y ancrer au moins pendant le temps nécessaire à atteindre l'opération suivante.

Avantageusement et selon l'invention, les tronçons de fils présentent des barbelures en forme d'écailles sur leur périphérie. Cette caractéristique permet de renforcer encore le pouvoir agrippant des particules et de réduire la proportion de particules qui n'accrochent pas au moment du dépôt ou qui tombent lors des manipulations subséquentes.

Selon une variante de la composition de collage selon l'invention, les particules thermofusibles auto-agrippantes présentent une forme de flocon comportant chacun une pluralité de branches barbelées s'éloignant radialement en saillie d'un noyau central. Cette forme particulièrement avantageuse permet de disposer de capacités d'accrochage dans plusieurs directions. En particulier, les branches barbelées se déploient dans un même plan autour du noyau central. Alternativement, les branches barbelées s'étendent selon toutes les directions de l'espace. Ainsi, déposées sur la face fibreuse de l'une des pièces à coller, les particules peuvent encore s'accrocher sur la face en regard de l'autre pièce, pour autant qu'elle soit également fibreuse, et contribuer au maintien relatif des deux pièces en position avant les opérations de collage proprement dit.

Avantageusement et selon l'invention, le noyau central présente une section très supérieure à celle des branches. Ainsi, lors de l'opération de collage proprement dit, c'est-à-dire lorsque l'apport de chaleur extérieure fait fondre les particules de colle thermofusible, les branches plus fines fondent en premier avec moins d'apport d'énergie qu'il n'en faut pour faire fondre le noyau. On peut ainsi réaliser un pré-collage par la fusion des branches avant d'apporter toute l'énergie nécessaire à la fusion des noyaux pour un collage définitif.

Avantageusement et selon l'invention, le noyau central comporte un coeur formé d'un matériau présentant une température de fusion supérieure à la température de fusion du matériau formant les branches. Dans cette version de la particule en flocon, non exclusive de la précédente, la différence de température de fusion entre les parties du flocon permet de mieux maitriser la force du collage qui peut être réglée en fonction de la quantité d'énergie (chaleur) apportée lors des opérations de collage à chaud.

Avantageusement et selon l'invention, la composition de collage est formée d'un mélange de particules thermofusibles auto-agrippantes de matières différentes, présentant des points de fusion différents. Ainsi, sur la base d'une répartition aléatoire et indépendante de la matière des différentes particules thermofusibles auto-agrippantes, on peut choisir par la température appliquée lors de l'opération de collage la proportion de particules thermofusibles auto-agrippantes qui fondent et réalisent un point de collage et donc régler la densité spatiale des points de collage.

L'invention s'étend également à un procédé de collage de pièces -notamment de pièces souples- l'une sur l'autre, selon lequel :
- on applique une composition de collage thermofusible sur au moins une face d'au moins une des pièces à coller,
- on applique au moins une face ainsi traitée d'une pièce à coller sur une face correspondante d'au moins une autre pièce à coller,
- on presse l'ensemble ainsi constitué et on le chauffe simultanément à une température prédéterminée pour activer la composition de collage,
caractérisé en ce qu'on utilise, à titre de composition de collage, une composition de particules thermofusibles auto-agrippantes selon l'invention.

Avantageusement et selon l'invention, à l'étape d'application, on entraine dans un dispositif de pulvérisation une quantité de particules thermofusibles auto-agrippantes de ladite composition de collage, à l'état sec, au moyen d'un gaz à une température inférieure à la température minimale de changement d'état de la composition de collage, et on projette les particules thermofusibles auto-agrippantes contre ladite face de la pièce à coller.

Ce procédé, qui utilise avantageusement des moyens de mise en oeuvre connus en eux-mêmes et économiques tels qu'un dispositif de pulvérisation à poudre, est adapté pour utiliser un gaz à une température suffisamment froide pour que les particules thermofusibles auto-agrippantes projetées restent à l'état solide et présentent une dureté suffisante pour que les pointes, barbelures et aspérités des particules thermofusibles auto-agrippantes s'accrochent dans les fibres de la surface contre laquelle elles sont projetées.

Avantageusement et selon l'invention, l'étape d'application - notamment de projection- de la composition de collage selon l'invention est complétée par une étape d'aspiration simultanée sur la face de la pièce à coller opposée à la face contre laquelle les particules thermofusibles auto-agrippantes sont projetées. On élimine ainsi tout effet de « rebond » des particules thermofusibles auto-agrippantes sur la pièce à coller tout en favorisant l'accrochage des particules thermofusibles auto-agrippantes, qui sont ainsi entraînées dans les fibres de la pièce.

Avantageusement et selon l'invention, l'aspiration est effectuée au travers d'un masque comportant au moins une découpe délimitant une zone sur laquelle les particules selon l'invention sont projetées, d'une deuxième zone exempte de particules thermofusibles auto-agrippantes selon l'invention. En employant un pochoir pour l'aspiration, on peut limiter les endroits où les particules thermofusibles auto-agrippantes s'accrochent et obtenir des collages sélectifs précis.

Avantageusement et selon l'invention, le masque est placé entre le dispositif de projection et la pièce à coller, ce qui permet de protéger le reste de la surface de la pièce et le cas échéant, de la tenir en position. Alternativement, le masque est placé sous la pièce, entre celle-ci et l'aspiration, ce qui permet un changement rapide de la pièce.

Avantageusement et selon l'invention, à l'étape d'application - notamment de projection- de la composition de collage selon l'invention, on génère une charge électrostatique d'une première polarité sur une face du revêtement ou du support destinée à recevoir la colle et on polarise les particules thermofusibles auto-agrippantes de la composition de collage selon l'invention avec une charge électrostatique de signe opposé. On a constaté ainsi que les particules thermofusibles auto-agrippantes ont tendance à s'orienter de telle sorte que leur plus grande dimension soit normale au plan de la face chargée, ce qui facilite leur accrochage.

Avantageusement et selon l'invention, on utilise une composition de collage comportant des proportions prédéterminées de particules thermofusibles auto-agrippantes présentant des températures de fusion étagées, et à l'étape de pression à chaud, on détermine la température et/ou la durée de l'opération afin de moduler la force du collage. En opérant un mélange de différents types de particules thermofusibles auto-agrippantes, par exemple réalisées en matières ayant des points de fusion différents, ces particules se répartissent uniformément sur la pièce à coller lors de la projection. Lors de l'étape de pression et de chauffe de l'ensemble à coller, la température atteinte détermine les particules qui fondent et donc le pourcentage des points de colle qui se forment. On peut ainsi réaliser par exemple un pré-collage où seulement un faible pourcentage des particules de colle atteignent leur point de fusion ou bien un collage fort dans lequel un grand pourcentage, voire la totalité des particules a fondu.

Avantageusement et selon l'invention, à l'issue de l'étape d'application -notamment de projection- de la composition de collage, on applique sur celle-ci -notamment par pulvérisation- un agent durcisseur adapté pour réagir avec les particules thermofusibles auto-agrippantes lors de la fusion de celles-ci de manière à limiter la réversibilité de la fusion. Cet agent durcisseur peut être en poudre lui aussi ou sous forme liquide et être pulvérisé juste après la composition de particules thermofusibles auto-agrippantes ou juste avant l'étape de pression à chaud.

En variante ou en combinaison, et toujours selon l'invention, à l'étape d'application -notamment de projection- de la composition de collage, on mélange à celle-ci un agent durcisseur adapté pour réagir avec les particules thermofusibles auto-agrippantes lors de la fusion de celles-ci de manière à limiter la réversibilité de la fusion. L'agent durcisseur peut également ne réagir qu'avec une fraction des particules thermofusibles auto-agrippantes, par exemple à la température maximale du collage afin de permettre un pré-collage réversible et un collage définitif quasi irréversible autorisant ainsi des ajustements avant le collage définitif.

L'invention concerne également une composition de particules thermofusibles auto-agrippantes et un procédé de mise en oeuvre d'une telle composition de collage caractérisés en combinaison par tout ou partie des caractéristiques mentionnées ci-dessus ou ci-après.

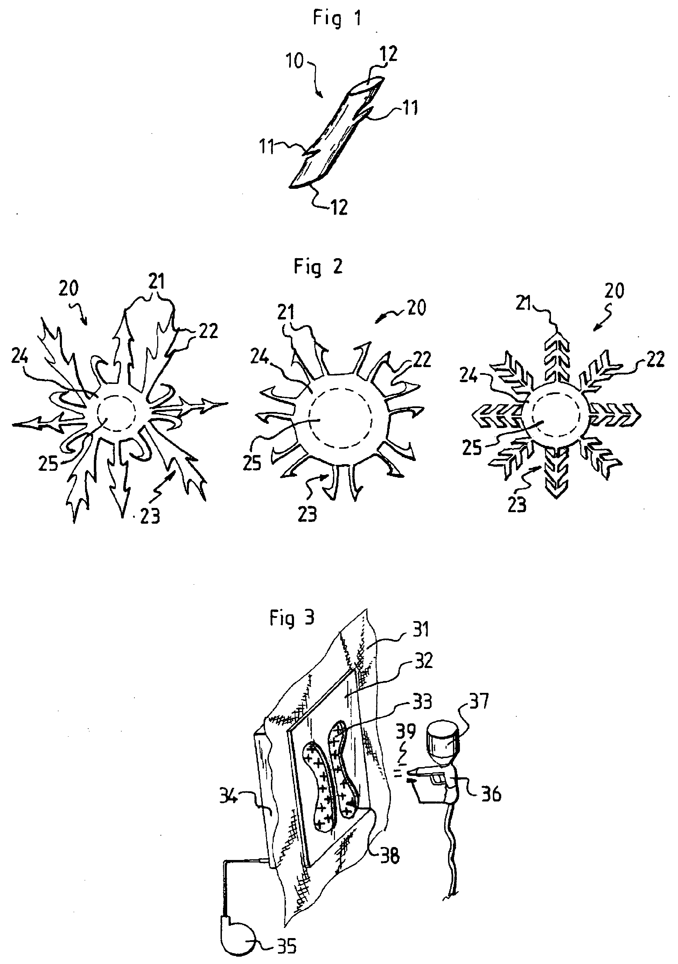

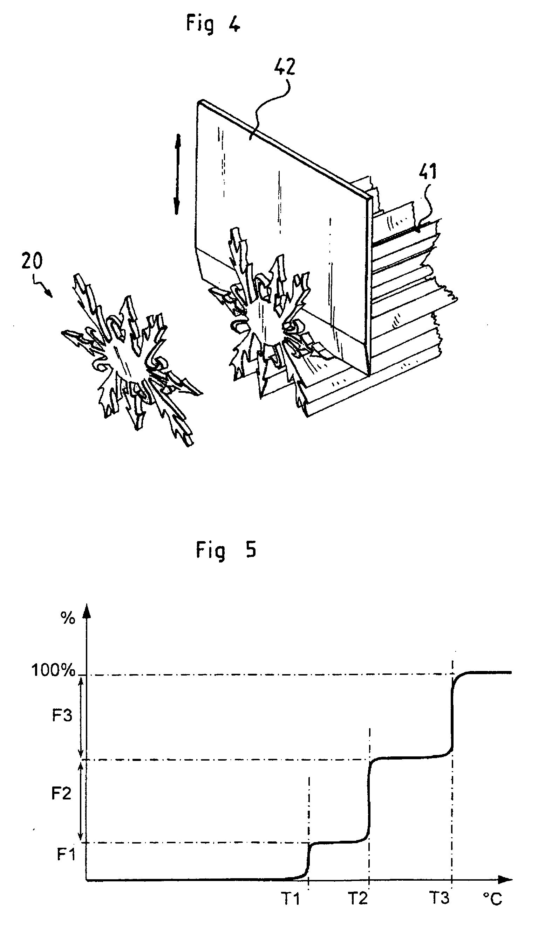

D'autres buts, caractéristiques et avantages de l'invention apparaîtront au vu de la description qui va suivre et des dessins annexés dans lesquels :
▪ la figure 1 représente une particule d'un premier type de la composition de particules thermofusibles auto-agrippantes selon l'invention,
▪ la figure 2 représente trois exemples d'une particule d'un deuxième type de la composition de particules thermofusibles auto-agrippantes selon l'invention,
▪ la figure 3 représente une étape du procédé de mise en oeuvre de la composition de particules thermofusibles auto-agrippantes selon l'invention,
▪ la figure 4 représente un mode d'obtention d'une particule du second type de la composition de particules thermofusibles auto-agrippantes selon l'invention, et
▪ la figure 5 est un graphe utile à la compréhension d'un aspect essentiel du procédé de mise en oeuvre de la composition de particules thermofusibles auto-agrippantes selon l'invention.

L'invention concerne une composition de particules thermofusibles auto-agrippantes formée de particules solides telles que paillettes, fils ou flocons d'une ou plusieurs matières prises parmi le groupe des matières permettant de réaliser des colles thermofusibles, susceptibles de passer d'un état solide à température ambiante par exemple, à un état visqueux voire liquide dès que la température franchit un seuil de température prédéterminé en fonction de la matière utilisée. La matière choisie pour former ces particules est sélectionnée en fonction de son aptitude à adhérer sur la matière et la structure des pièces à coller. Les colles thermofusibles contiennent en général des polymères tels que polyéthylènes, polypropylènes, polyamides, polyuréthanes ainsi que des copolymères tels que l'EVA (éthylène vinyle acétate), qui en forment la base et sont mélangés avec des résines, cires et autres adjuvants qui apportent des caractéristiques propres telles que le pouvoir d'adhésion, en particulier sur des surfaces fibreuses, et modifient d'autres constantes physiques comme les températures de fusion ou de transition vitreuse. Ces produits sont connus en tant que tels et sont usuellement fournis en bâtonnets extrudés, en granulés ou en films.

La caractéristique essentielle de la composition de particules thermofusibles auto-agrippantes de l'invention est d'être constituée de particules adaptées pour s'accrocher en surface de l'une des pièces à coller, et plus particulièrement pour pouvoir s'agripper aux fibres des surfaces fibreuses telles que tissus, feutres, mousses, etc. Grâce à cette propriété, la composition de particules thermofusibles auto-agrippantes selon l'invention peut être employée « à sec », c'est-à-dire qu'elle ne nécessite ni solvant ni dispersant pour être véhiculée et déposée sur une pièce à coller.

On a représenté à la figure 1 une particule 10 de composition de particules thermofusibles auto-agrippantes qui se présente sous la forme d'un tronçon d'un fil de section sensiblement cylindrique, obtenu par exemple par extrusion d'une des matières précitées sous la forme d'un fil fin d'un diamètre compris entre 0,1 à 0,5 millimètres dont on découpe des longueurs variant de 1 à 5 millimètres, de préférence en biseau pour former des pointes 12. On a pu remarquer que dès lors que les particules présentent ce facteur de forme variant entre 4 et 40 entre leur diamètre et leur longueur, elles ont tendance à se loger dans et entre les fibres des surfaces fibreuses telles que les tissus, feutres, mousses sur lesquelles ces particules sont répandues (effet « petits cheveux »). Ainsi, dans sa forme la plus simple, la composition de particules thermofusibles auto-agrippantes de l'invention est constituée de tels tronçons de fils qu'il suffit de pulvériser sur une surface fibreuse, comme par exemple un revêtement de tissu à coller sur un support.

On peut encore améliorer la capacité de ces particules à s'agripper aux fibres de la surface sur laquelle on les a pulvérisées en formant à leur surface des aspérités et des barbelures, par exemple sous la forme d'écailles 11 propres à engager les fibres de la surface. Les écailles 11 sont par exemple obtenues lors de l'extrusion du fil en réalisant des encoches à intervalles réguliers à la périphérie du fil et en étirant le fil ainsi entaillé avant d'en découper des tronçons. Avantageusement, ces encoches sont faites par des couteaux se déplaçant dans des plans inclinés de part et d'autre d'un plan orthogonal à l'axe du fil de manière à obtenir des écailles 11 s'ouvrant dans les deux sens le long de l'axe.

Une autre forme de particule pouvant être utilisée dans une composition de particules thermofusibles auto-agrippantes de l'invention se présente sous la forme d'un flocon 20 dont quelques exemples de profil sont illustrés à la figure 2. Le flocon 20 comporte un noyau 24 duquel s'éloignent radialement une pluralité de branches 23. A l'extrémité opposée au noyau 24, les branches 23 portent au moins une pointe 21 présentant des barbelures 22. Un flocon de cette forme ou d'une forme analogue peut être réalisé comme représenté à la figure 4 par l'extrusion d'un profilé 41 dans la matière thermofusible choisie et découpe de celui-ci en bout d'extrudeuse, lorsque la matière refroidie est à nouveau solide, par une lame 42 oscillant devant l'embout de l'extrudeuse. Les dimensions d'un tel flocon doivent être compatibles avec son utilisation sous forme de poudre à pulvériser sur une pièce à coller, et par exemple, la taille des branches s'étend entre 0,1 mm et 2 mm, pour une épaisseur de 0,1 à 0,5 mm.

Le flocon 20 peut également avoir une forme aléatoire, pour autant que son contour présente une bordure irrégulière, comportant des pointes, aspérités et barbelures permettant son ancrage sur une surface fibreuse. Une telle particule peut être ainsi avantageusement obtenue par hachage d'un film de matière thermofusible. Bien entendu, les flocons 20 représentés à la figure 2 comportent des branches 23 qui s'étendent dans un plan, mais l'invention s'applique également à un flocon dont les branches s'étendraient dans les trois directions de l'espace, comme par exemple une particule à noyau sphérique comportant de multiples branches en forme de crochets.

Un tel flocon présente l'intérêt de pouvoir s'agripper avec certaines de ses pointes aux fibres de la surface fibreuse de la pièce à coller sur laquelle il est projeté et de conserver à l'opposé de celle-ci des pointes disponibles pour s'agripper, le cas échéant, sur la surface du support sur lequel cette pièce doit être collée, si celui-ci présente également une surface fibreuse.

Cette forme caractéristique de la particule d'une composition selon l'invention permet ainsi, avant même de débuter le processus de collage, de réaliser une liaison « faible » entre la pièce à coller et le support par un accrochage de certaines particules à la fois au support et à la pièce à coller.

Le noyau 24 du flocon 20 se présente dans les exemples illustrés en figure 2 comme un cylindre d'épaisseur égale à celle des branches 23 et d'un diamètre sensiblement égal, voire même supérieur à la longueur des branches. De ce fait, la section et donc le volume du noyau sont sensiblement supérieurs à ceux des branches. Cette caractéristique remarquable entraine un comportement différent des branches et du noyau lors de la chauffe et de la fusion de la particule au moment du collage. Pour une même quantité d'énergie apportée sous forme de chaleur, les branches atteignent leur température de fusion avant le noyau. Ainsi, en interrompant l'apport d'énergie avant que le noyau n'ait fondu, on obtient un collage dans lequel seules les branches des particules contribuent. Le point de colle obtenu au niveau de chaque particule est donc de dimension plus faible et le collage résultant moins profond.

Le noyau 24 du flocon peut également être constitué d'un coeur 25, sous la forme d'une âme cylindrique d'une matière thermofusible présentant une température de fusion supérieure à la matière formant la périphérie du noyau 24 et les branches 23. On peut ainsi obtenir, de manière analogue à l'exemple précédent, un point de colle dans lequel intervient une part variable du volume de colle constituant la particule.

Il est donc possible avec la composition de particules thermofusibles auto-agrippantes de l'invention, de régler la force du collage en chaque point de colle créé par une particule de la composition.

Cependant, il est en outre possible de régler la force du collage, non plus en un point, mais par une répartition plus ou moins dense des points de colle sur l'ensemble de la surface de collage.

Pour cela, la composition de particules thermofusibles auto-agrippantes est constituée d'un mélange de particules réalisées dans différentes matières thermofusibles, possédant chacune un point de fusion différent et/ou un point de transition vitreuse différent. On peut ainsi prévoir par exemple une composition de particules thermofusibles auto-agrippantes constituée de 20% de particules ayant un point de fusion à 60°C, 40% de particules ayant un point de fusion à 70°C et 40% de particules ayant un point de fusion supérieur à 80°C. D'autres exemples peuvent être envisagés, par exemple avec également des particules ayant un point de fusion à 100°C, des particules ayant un point de fusion à 120°C...

Une fois les particules mélangées pour former une composition de particules thermofusibles auto-agrippantes relativement homogène, la répartition des différents types de particules est parfaitement aléatoire et respecte, quel que soit le mode d'application sur la surface à coller, une quantité de particules de chaque type par unité de surface homogène avec les proportions du mélange.

De cette manière, si l'on chauffe un assemblage de pièces à coller sur lesquelles on a pulvérisé une composition de particules thermofusibles auto-agrippantes correspondant à l'exemple ci-dessus, au dessus de 60°C mais au dessous de 70°C, seules les particules ayant un point de fusion à 60°C vont fondre et former un point de colle reliant les deux pièces. On obtient ainsi un collage par points où seulement 20% des points de colle potentiels se sont formés. En outre ces points sont uniformément répartis sur toute la surface de collage. De même, si l'on chauffe l'assemblage au-dessus de 70°C, ce seront 60% des points de colle potentiels qui se seront formés et au-dessus de 80°C, 100% des particules auront formé un point de colle, atteignant alors l'efficacité maximale du collage. De cette manière, la composition de particules thermofusibles auto-agrippantes de l'invention permet d'obtenir un collage d'intensité graduelle.

Un des avantages essentiels de la composition de particules thermofusibles auto-agrippantes selon l'invention réside dans le fait que les particules de colle, ainsi employées à sec, forment une pluralité de points de colle disjoints et indépendants les uns des autres et non, comme avec les colles liquides ou pâteuses, une surface continue. L'élasticité des pièces ainsi encollées, particulièrement dans le cas de tissus fins tels que des jerseys, est préservée et l'aspect cartonné obtenu avec les colles connues peut être évité. Cette propriété est également très avantageuse lors du recyclage en fin de vie des assemblages réalisés au moyen d'une telle composition de particules thermofusibles auto-agrippantes, en particulier pour des garnitures de siège ou des habillages de parois d'habitacle dans les automobiles. Les normes de recyclage imposent en effet que la séparation des matières constituant ces assemblages, par exemple tissus de revêtement et mousses formant le support, soit la plus rigoureuse possible. Avec les points de colle indépendants formés par la composition de particules thermofusibles auto-agrippantes de l'invention, lors de l'arrachage des revêtements, seuls des points minimes de la mousse du support sont entrainés par les points de colle, (à la différence des collages faits avec les colles liquides ou pâteuses connues qui provoquent l'arrachage de toute la surface des plaques de mousse).

La composition de particules thermofusibles auto-agrippantes de l'invention est mise en oeuvre dans un procédé d'assemblage par collage d'un revêtement, en particulier d'un revêtement souple, sur un support tel que par exemple une garniture de siège en mousse. Dans un tel procédé, connu par exemple de EP 0 350 979, on enduit au moins l'une des faces à coller du revêtement et/ou du support avec une colle thermo-activable, puis on met en regard les pièces à coller et on les presse l'une contre l'autre tout en les chauffant. Sous l'effet de la température, la colle s'active, c'est-à-dire devient collante et fixe l'une à l'autre les deux pièces à coller.

Selon l'invention, on adapte ce procédé pour utiliser une composition de particules thermofusibles auto-agrippantes selon l'invention telle que décrite précédemment, en particulier lors de la première étape consistant à déposer de la colle sur une face du revêtement ou du support. Dans cette étape, on utilise la composition de particules thermofusibles auto-agrippantes dans son état sec, c'est-à-dire contrairement à la technique antérieure connue, sans la disperser dans un liant aqueux. La composition sèche de particules thermofusibles auto-agrippantes est utilisée dans un dispositif de projection de poudre tel que par exemple un pistolet 36 (figure 3) adapté pour la peinture en poudre. On note cependant qu'un tel pistolet doit être adapté à la taille des particules à projeter. La composition de particules thermofusibles auto-agrippantes est versée dans un réservoir d'alimentation 37 qui peut être ou non partie du pistolet 36. A l'intérieur de ce réservoir, la composition de particules thermofusibles auto-agrippantes est fluidisée par un flux de gaz, par exemple de l'air sec, à une température inférieure à la température minimale de changement d'état de la composition de particules thermofusibles auto-agrippantes, c'est-à-dire très nettement inférieure à la température de fusion la plus basse des matières employées pour la réalisation des particules. Par exemple, si la température de fusion est de 60°C, le gaz employé ne devrait pas dépasser la température de 30°C afin de conserver la rigidité et la dureté des particules. La composition de particules thermofusibles auto-agrippantes ainsi fluidisée est ensuite projetée par ce flux de gaz, ou un flux parallèle, en direction de la face à coller du revêtement 31.

Avantageusement, lorsque le revêtement 31 est perméable à l'air, comme c'est le cas pour un tissu par exemple, il est placé sur un caisson 34 relié à une source d'aspiration telle qu'une turbine 35. Une fois le revêtement 31 positionné sur le caisson 34, il est maintenu en place par un masque 32 comportant des découpes 33. Dans l'exemple décrit, le masque 32 est placé au-dessus du revêtement 31, entre celui-ci et le pistolet 36, ce qui présente l'avantage si le masque 32 est réalisé dans une matière non fibreuse comme par exemple une plaque de polymethylacrylate, de permettre de récupérer la composition de particules thermofusibles auto-agrippantes projetée en dehors des découpes 33. Alternativement, le masque 32 pourrait être disposé entre le revêtement 31 et le caisson d'aspiration 34 ou bien le revêtement 31 pourrait être pris entre deux masques homologues. L'aspiration ainsi réalisée au travers du revêtement permet d'ancrer les particules de la composition dans les fibres du revêtement de manière plus efficace que par une simple projection. En outre, l'utilisation d'un masque 32 comportant des découpes 33 réalise un pochoir qui permet de délimiter des zones masquées qui sont exemptes de composition de particules thermofusibles auto-agrippantes et donc ne seront pas collées dans les étapes ultérieures du procédé, par rapport aux zones situées sous les découpes 33 sur lesquelles la composition de particules thermofusibles auto-agrippantes est projetée et qui formeront les zones collées. Cette disposition permet de réaliser des collages par zones spécifiques utiles dans certaines applications (collages en creux, formes en trois dimensions). A noter également que le (ou les) masque(s) peuvent eux aussi être réalisés en trois dimensions si nécessaire.

Pour faciliter l'adhérence de la composition de particules thermofusibles auto-agrippantes lorsqu'elle est projetée sur une surface lisse, par exemple une surface métallique ou en bois ou en matériau polymérique synthétique, rien n'empêche d'appliquer au préalable sur cette surface au moins une couche d'un primaire d'adhérence (par exemple une couche d'une composition autoadhésive et/ou d'une matière poreuse en surface pour retenir les particules) permettant la fixation des particules.

Alternativement à l'aspiration ou en complément de celle-ci, l'étape de projection de la composition de particules thermofusibles auto-agrippantes sur le revêtement peut être aussi avantageusement assistée par la génération de charges électrostatiques différentielles entre la composition de particules thermofusibles auto-agrippantes et le revêtement. En effet, lorsque le revêtement est étanche ou faiblement perméable à l'air, par exemple pour des tissus revêtus de vinyle, l'aspiration est difficilement utilisable. Il en va de même lorsque la projection de composition de particules thermofusibles auto-agrippantes s'effectue aussi sur le support, en général constitué de mousse élastique fixée sur une armature bois ou métal, pour lequel l'aspiration est certes possible mais parfois peu pratique.

On a alors constaté qu'en générant une charge électrostatique 38 d'une première polarité, positive comme représenté à la figure 3; ou négative, dépendant de la matière de la face du revêtement ou du support destinée à recevoir la composition de particules thermofusibles auto-agrippantes, et en polarisant les particules de la composition avec une charge électrostatique 39 de signe opposé, on pouvait assister la projection de la composition et améliorer la pénétration des pointes et barbules des particules dans la surface fibreuse sur laquelle ces particules étaient projetées. On a en outre constaté que la charge électrostatique des particules se concentrait aux extrémités (pointes) de celles-ci, particulièrement lorsque ces particules sont sous forme de tronçons de fils, ce qui a pour effet de redresser ces particules et de les placer « en hérisson », leur grand axe s'alignant avec une direction orthogonale localement à la surface de la pièce à coller. On dispose ainsi d'une surface de la pièce à coller, qu'il s'agisse du revêtement ou du support, sur laquelle les particules de colle sont hérissées et présentent des pointes opposées à la surface de la pièce aptes à pénétrer et s'ancrer dans la surface de l'autre pièce, ce qui permet de réaliser un positionnement précis d'une pièce sur l'autre.

Il est à noter également qu'une composition de particules thermofusibles auto-agrippantes selon l'invention peut aussi être déposée directement au contact des parois d'un moule d'injection d'une pièce en mousse ou en matériau polymérique synthétique, de façon à être ensuite solidarisée au moment du démoulage, à la surface externe de la pièce ainsi moulée.

Une fois que l'une au moins des pièces à coller a été recouverte sur l'une de ses faces par la composition de particules thermofusibles auto-agrippantes de l'invention, le procédé se poursuit par la mise en place du revêtement sur le support, mise en place qui, comme on l'a vu précédemment, est facilitée par la capacité d'accrochage apportée par les pointes et barbelures des particules de la composition tournées vers la face en regard de l'autre pièce à coller.

A l'étape suivante, l'ensemble support et revêtement est pressé contre un lit de billes de verre fluidifié par de l'air chaud. Comme connu en soi, le lit de billes de verre permet de plaquer uniformément le revêtement sur le support, tant dans les creux que sur les bosses de celui-ci.

Avantageusement, la température de l'air chaud servant à fluidifier le lit de billes de verre est choisie en fonction des caractéristiques de la composition de particules thermofusibles auto-agrippantes utilisée et de la force de collage que l'on veut obtenir. Il en va de même pour la durée pendant laquelle cette température est appliquée. Ainsi, si l'on utilise une composition de particules thermofusibles auto-agrippantes constituée de particules comportant un noyau massif entouré de branches barbelées fines, l'application d'une température légèrement supérieure à la température de fusion de la matière pendant une durée brève permet de faire fondre les branches des particules sans en faire fondre le noyau. En pratique, la quantité de matière thermofusible, donc de colle, mise en oeuvre est réduite et le collage ainsi obtenu est faible et permet par exemple une retouche de positionnement des pièces à coller. A l'opposé, si la température appliquée est notablement supérieure à la température de fusion du matériau et qu'elle est appliquée pendant un temps suffisant pour faire fondre branches et noyau des particules, toute la quantité de colle disponible est mise en oeuvre et le collage atteint sa force maximale.

Il en va de même lorsqu'on utilise une composition composée de particules de différentes matières présentant des températures de fusion étagées. Comme on l'a vu précédemment, il est possible de constituer une composition selon l'invention comportant un mélange de différentes particules dans des proportions prédéterminées. Par exemple, on a représenté sur le graphe de la figure 5 le cas d'une composition comportant une première proportion F1 de particules présentant une température de fusion T1, une seconde proportion F2 de particules présentant une température de fusion T2 supérieure à T1 et une troisième proportion F3 de particules présentant une température de fusion T3 supérieure à T2. L'utilisation d'une telle composition permet si on chauffe l'ensemble des pièces à coller à une température supérieure à T1 mais inférieure à T2 de ne faire fondre que la fraction F1 des particules pulvérisées, tout en préservant la forme des particules des fractions F2 et F3. De ce fait, si on est amené à décoller les pièces après cette étape, seules les particules de la fraction F1 ne remplissent plus leur fonction d'accrochage des deux pièces entre elles. Les particules des fractions complémentaires ayant conservé leur caractéristique auto-agrippante permettent un repositionnement des pièces à coller.

En chauffant l'ensemble à une température T2, les fractions F1 et F2 des particules pulvérisées fondent, mettant en oeuvre une quantité de colle plus importante et donc réalisent un collage plus fort. Il en va de même si on franchit la température T3 où, dès lors toute la colle est mise en oeuvre pour un collage maximum.

La mise en oeuvre d'une composition de particules thermofusibles auto-agrippantes peut cependant présenter un inconvénient dans certains cas d'emploi, où les pièces collées par ce procédé sont amenées à rencontrer des températures supérieures à la température de fusion d'une au moins des matières utilisées au cours de leur service. Il est alors connu de faire intervenir un agent durcisseur adapté pour réagir avec les matières thermofusibles lors de leur fusion pour rendre cette fusion irréversible, ou au moins plus difficilement réversible.

Avantageusement, cet agent durcisseur, s'il se présente sous forme liquide ou pulvérulente, peut être pulvérisé sur la composition de particules thermofusibles auto-agrippantes de l'invention à l'issue de la projection des particules sur la pièce à coller. Si les pièces à coller doivent être entreposées avant l'étape de pression à chaud pendant un temps d'attente susceptible de perturber l'effet de l'agent durcisseur, celui-ci peut également être appliqué immédiatement avant cette étape.

Alternativement, si cet agent durcisseur peut être disponible sous forme de poudre, il peut être mélangé avec la composition de particules thermofusibles auto-agrippantes préalablement à la projection de celle-ci sur les pièces à coller et être projeté en même temps.

Quel que soit son mode d'application, l'agent durcisseur peut être utilement choisi de manière à ne réagir qu'à partir d'une température prédéterminée, par exemple, dans le cas d'une composition de particules thermofusibles auto-agrippantes comportant des particules de plusieurs matières avec des températures de fusion étagées, à la température de fusion la plus élevée. Ainsi, l'agent durcisseur ne réagira pas avec les fractions de la composition dont la température de fusion est inférieure afin de permettre un pré-collage réversible et un collage définitif quasi irréversible autorisant ainsi des ajustements avant le collage définitif.

Bien entendu, cette description est donnée à titre d'exemple illustratif uniquement et l'homme du métier pourra y apporter de nombreuses modifications sans sortir de la portée de l'invention, comme par exemple :
- modifier les formes des particules et de leurs éléments d'accrochage (pointes, barbelures),
- ou encore proposer d'autres méthodes d'obtention (chimiques plutôt que mécaniques) de telles particules,
- ou encore d'autres procédés d'application des particules, par exemple :
   - par utilisation d'une boîte poudreuse à fond perforé doté d'une plaque guillotine elle-même perforée montée coulissante sur le fond et pouvant être manoeuvrée alternativement entre une position de délivrance de la composition de particules thermofusibles auto-agrippantes contenue dans la boîte dans laquelle les perforations du fond et de la plaque sont en regard les unes des autres, et une position d'obturation des perforations du fond, la boîte étant reliée ou non à une source d'air comprimé,
   - ou par utilisation d'un dispositif de laminage comprenant un premier cylindre creux perforé contenant les particules pourront être libérées à travers les perforations de ce cylindre, et au moins deuxième cylindre de calandrage (de préférence deux cylindres de calandrage) présentant un état de surface rugueux, une nappe (revêtement en tissu, mousse, cuir...) étant passée entre ces cylindres de façon à déposer les particules selon l'invention sur une face de cette nappe,
- ou encore d'autres procédés de chauffage des particules, par exemple par irradiation infrarouge et/ou par laser et/ou par conduction (contact avec une pièce chauffée)...

## Revendications

1. Composition de collage comprenant des particules, dites particules thermofusibles auto-agrippantes, formées dans une matière choisie dans le groupe des colles thermofusibles, et présentant des pointes (12, 21) et/ou des barbelures (11, 22) propres à s'accrocher en surface d'au moins une pièce à coller.

2. Composition selon la revendication 1, **caractérisée en ce que** les particules sont formées de tronçons de fils (10) présentant un facteur de forme entre leur longueur et la plus grande dimension de leur section compris entre 4 et 40.

3. Composition selon la revendication 2, **caractérisée en ce que** les tronçons de fils présentent des barbelures en forme d'écailles (11) sur leur périphérie.

4. Composition selon la revendication 1, **caractérisée en ce que** les particules thermofusibles auto-agrippantes présentent une forme de flocon (20) comportant chacun une pluralité de branches (23) barbelées s'éloignant radialement en saillie d'un noyau (24) central.

5. Composition selon la revendication 4 **caractérisée en ce que** le noyau (24) central présente une section très supérieure à celle des branches (23).

6. Composition selon l'une des revendications 4 ou 5, **caractérisée en ce que** le noyau (24) central comporte un coeur (25) formé d'un matériau présentant une température de fusion supérieure à la température de fusion du matériau formant les branches.

7. Composition selon l'une des revendications 1 à 6, **caractérisée en ce qu'**elle est formée d'un mélange de particules thermofusibles auto-agrippantes de matières différentes, présentant des points de fusion différents.

8. Procédé de collage de pièces l'une sur l'autre, selon lequel :
- on applique une composition de collage thermofusible sur au moins une face d'au moins une des pièces à coller,
- on applique au moins une face ainsi traitée d'une pièce à coller sur une face correspondante d'au moins une autre pièce à coller,
- on presse l'ensemble ainsi constitué et on le chauffe simultanément
à une température prédéterminée pour activer la composition de collage, **caractérisé en ce qu'**on utilise, à titre de composition de collage, une composition de particules thermofusibles auto-agrippantes selon l'une des revendications 1 à 7.

9. Procédé selon la revendication 8, **caractérisée en ce que**, à l'étape d'application, on entraine dans un dispositif de pulvérisation (36) une quantité de particules thermofusibles auto-agrippantes de ladite composition de collage, à l'état sec, au moyen d'un gaz à une température inférieure à la température minimale de changement d'état de la composition de collage, et on projette les particules thermofusibles auto-agrippantes contre au moins une face d'au moins une pièce à coller (31).

10. Procédé selon l'une des revendications 8 ou 9, **caractérisé en ce que** l'étape d'application de la composition de collage est complétée par une étape d'aspiration simultanée sur la face de la pièce à coller opposée à la face contre laquelle les particules thermofusibles auto-agrippantes sont projetées.

11. Procédé selon les revendications 9 et 10, **caractérisé en ce que** l'aspiration est effectuée au travers d'un masque (32) comportant au moins une découpe (33) délimitant une zone sur laquelle les particules thermofusibles auto-agrippantes sont projetées, d'une deuxième zone exempte de particules thermofusibles auto-agrippantes.

12. Procédé selon la revendication 11, **caractérisé en ce que** le masque (32) est placé entre le dispositif de projection (36) et la pièce à coller (31).

13. Procédé selon l'une des revendications 8 à 12, **caractérisé en ce qu'**à l'étape d'application de la composition de collage, on génère une charge électrostatique (38) d'une première polarité sur la face de la pièce à coller destinée à recevoir ladite composition et on polarise les particules thermofusibles auto-agrippantes de ladite composition de collage avec une charge électrostatique (39) de signe opposé.

14. Procédé selon l'une des revendications 8 à 13, **caractérisé en ce qu'**on utilise une composition de collage comportant des proportions (F1, F2, F3) prédéterminées de particules thermofusibles auto-agrippantes présentant des températures de fusion (T1, T2, T3) étagées, et **en ce qu'**à l'étape de pression à chaud, on détermine la température et/ou la durée de l'opération afin de moduler la force du collage.

15. Procédé selon l'une des revendications 8 à 14, **caractérisé en ce que**, à l'issue de l'étape d'application de la composition de collage, on applique sur celle-ci -notamment par pulvérisation- un agent durcisseur adapté pour réagir avec les particules thermofusibles auto-agrippantes lors de la fusion de celles-ci de manière à limiter la réversibilité de la fusion.

16. Procédé selon l'une des revendications 8 à 15, **caractérisé en ce que**, à l'étape d'application de la composition de collage, on mélange à celle-ci un agent durcisseur adapté pour réagir avec les particules thermofusibles auto-agrippantes lors de la fusion de celles-ci de manière à limiter la réversibilité de la fusion.

## Patentansprüche

1. Klebezusammensetzung, Partikel umfassend, sogenannte selbsthaftende heißschmelzbare Partikel, die aus einem Material gebildet sind, das aus der Gruppe der Schmelzklebstoffe ausgewählt ist, und Spitzen (12, 21) und/oder Widerhaken (11, 22) aufweisen, die geeignet sind, sich an der Oberfläche mindestens eines zu klebenden Teils festzuhaken.

2. Zusammensetzung nach Anspruch 1, **dadurch gekennzeichnet, dass** die Partikel aus Fadenabschnitten (10) mit einem Formfaktor zwischen ihrer Länge und der größten Abmessung ihres Querschnitts im Bereich zwischen 4 und 40 gebildet sind.

3. Zusammensetzung nach Anspruch 2, **dadurch gekennzeichnet, dass** die Fadenabschnitte Widerhaken in Form von Schuppen (11) an ihrem Umfang aufweisen.

4. Zusammensetzung nach Anspruch 1, **dadurch gekennzeichnet, dass** die selbsthaftenden heißschmelzbaren Partikel eine Flockenform (20) mit jeweils einer Vielzahl widerhakenbesetzter Äste (23), die sich von einem mittigen Kern (24) radial nach außen vorstehend erstrecken, aufweisen.

5. Zusammensetzung nach Anspruch 4, **dadurch gekennzeichnet, dass** der mittige Kern (24) einen Querschnitt aufweist, der sehr viel größer als jener der Äste (23) ist.

6. Zusammensetzung nach einem der Ansprüche 4 oder 5, **dadurch gekennzeichnet, dass** der mittige Kern (24) ein Zentrum (25) umfasst, das aus einem Material gebildet ist, das eine Schmelztemperatur aufweist, die höher als die Schmelztemperatur des Materials ist, das die Äste bildet.

7. Zusammensetzung nach einem der Ansprüche 1 bis 6, **dadurch gekennzeichnet, dass** sie aus einer Mischung selbsthaftender heißschmelzbarer Partikel aus verschiedenen Materialien gebildet ist, die verschiedene Schmelzpunkte aufweisen.

8. Verfahren zum Aufeinanderkleben von Teilen, wobei:
- man eine heißschmelzbare Klebezusammensetzung auf mindestens eine Fläche mindestens eines zu klebenden Teils aufträgt,
- man mindestens eine derart behandelte Fläche eines zu klebenden Teils auf eine entsprechende Fläche mindestens eines anderen zu klebenden Teils aufbringt,
- man die auf diese Weise gebildete Gesamtheit zusammenpresst und gleichzeitig auf eine vorbestimmte Temperatur erwärmt, um die Klebezusammensetzung zu aktivieren, **dadurch gekennzeichnet, dass** man als Klebezusammensetzung eine Zusammensetzung aus selbsthaftenden heißschmelzbaren Partikeln nach einem der Ansprüche 1 bis 7 verwendet.

9. Verfahren nach Anspruch 8, **dadurch gekennzeichnet, dass** man bei dem Auftragungsschritt eine Menge selbsthaftender heißschmelzbarer Partikel der Klebezusammensetzung, in trockenem Zustand, mittels eines Gases auf einer Temperatur unter der Mindesttemperatur für eine Zustandsänderung der Klebezusammensetzung in eine Zerstäubungsvorrichtung (36) einträgt und die selbsthaftenden heißschmelzbaren Partikel gegen mindestens eine Fläche mindestens eines zu klebenden Teils (31) sprüht.

10. Verfahren nach einem der Ansprüche 8 oder 9, **dadurch gekennzeichnet, dass** der Schritt des Auftragens der Klebezusammensetzung durch einen gleichzeitigen Ansaugschritt an der Fläche des zu klebenden Teils, die der Fläche gegenüberliegt, gegen welche die selbsthaftenden heißschmelzbaren Partikel gesprüht werden, ergänzt wird.

11. Verfahren nach den Ansprüchen 9 und 10, **dadurch gekennzeichnet, dass** die Ansaugung durch eine Maske (32) hindurch erfolgt, die mindestens einen Ausschnitt (33) umfasst, der einen Bereich, auf den die selbsthaftenden heißschmelzbaren Partikel gesprüht werden, von einem zweiten Bereich, der frei von selbsthaftenden heißschmelzbaren Partikeln ist, abgrenzt.

12. Verfahren nach Anspruch 11, **dadurch gekennzeichnet, dass** die Maske (32) zwischen der Sprühvorrichtung (36) und dem zu klebenden Teil (31) angeordnet wird.

13. Verfahren nach einem der Ansprüche 8 bis 12, **dadurch gekennzeichnet, dass** man bei dem Schritt des Auftragens der Klebezusammensetzung an der Fläche des zu klebenden Teils, die dafür vorgesehen ist, die Zusammensetzung aufzunehmen, eine elektrostatische Aufladung (38) einer ersten Polarität erzeugt und man die selbsthaftenden heißschmelzbaren Partikel der Klebezusammensetzung mit einer elektrostatischen Aufladung (39) mit entgegengesetztem Vorzeichen polarisiert.

14. Verfahren nach einem der Ansprüche 8 bis 13, **dadurch gekennzeichnet, dass** man eine Klebezusammensetzung verwendet, die vorbestimmte Anteile (F1, F2, F3) selbsthaftender heißschmelzbarer Partikel umfasst, die abgestufte Schmelztemperaturen (T1, T2, T3) aufweisen, und dadurch, dass man bei dem Heißpress-Schritt die Temperatur und/oder die Dauer des Arbeitsvorgangs bestimmt, um die Haftfestigkeit den jeweiligen Umständen anzupassen.

15. Verfahren nach einem der Ansprüche 8 bis 14, **dadurch gekennzeichnet, dass** man am Ende des Schritts des Auftragens der Klebezusammensetzung auf diese - insbesondere durch Zerstäuben - einen Härter aufträgt, der dafür geeignet ist, mit den selbsthaftenden heißschmelzbaren Partikeln während des Schmelzens dieser Letzteren zu reagieren, um die Umkehrbarkeit des Schmelzprozesses einzuschränken.

16. Verfahren nach einem der Ansprüche 8 bis 15, **dadurch gekennzeichnet, dass** man bei dem Schritt des Auftragens der Klebezusammensetzung dieser einen Härter beimischt, der dafür geeignet ist, mit den selbsthaftenden heißschmelzbaren Partikeln während des Schmelzens dieser Letzteren zu reagieren, um die Umkehrbarkeit des Schmelzprozesses einzuschränken.

## Claims

1. A gluing composition comprising particles, named hot-melt self-gripping particles, formed in a material chosen from the group of hot-melt glues, and having spikes (12, 21) and/or barbs (11, 12) for attaching themselves on the surface of at least one part to be glued.

2. The composition according to claim 1, **characterised in that** the particles are formed from pieces of filaments (10) with a form factor between their length and the largest dimension of their cross-section of between 4 and 40.

3. The composition according to claim 2, **characterised in that** the pieces of filaments have barbs in the form of scales (11) on their periphery.

4. The composition according to claim 1, **characterised in that** the hot-melt self-gripping particles have the form of a flake (20), each comprising a plurality of barbed branches (23) extending radially in projection from a central nucleus (24).

5. The composition according to claim 4, **characterised in that** the central nucleus (24) has a cross-section very much greater than that of the branches (23).

6. The composition according to one of claims 4 or 5, **characterised in that** the central nucleus (24) comprises a core (25) formed from a material with a melting temperature higher than the melting temperature of the material forming the branches.

7. The composition according to one of claims 1 to 6, **characterized in** the it is formed from a mixture of hot-melt self-gripping particles of different materials with different melting points.

8. A method for gluing parts to one another, in which:
- a hot-melt gluing composition is applied to at least one surface of at least one of the parts to be glued,
- at least one surface thus treated of a part to be glued is applied to a corresponding surface of at least one other part to be glued,
- the whole unit made up in this way is pressed and simultaneously
heated to a predetermined temperature to activate the gluing composition, **characterised in that**, as the gluing composition, a composition is used of hot-melt self-gripping particles according to one of claims 1 to 7.

9. The method according to claim 8, **characterised in that** at the stage of application an amount of hot-melt self-gripping particles of the said gluing composition is led in the dry state into a spraying device (36) by means of a gas at a temperature below the minimum temperature at which the state of the gluing composition changes, and the hot-melt self-gripping particles are projected against at least one surface of a part (31) to be glued.

10. The method according to one of claims 8 or 9, **characterised in that** the stage of application of the gluing composition is supplemented by a simultaneous stage of suction on the surface of the part to be glued opposite to the surface against which the hot-melt self-gripping particles are projected.

11. The method according to claims 9 and 10, **characterised in that** the suction is carried out through a mask (32) comprising at least one cut-out (33) delimiting a zone on which the hot-melt self-gripping particles are projected from a second zone free from hot-melt self-gripping particles.

12. The method according to claim 11, **characterised in that** the mask (32) is placed between the projection device (36) and the part (31) to be glued.

13. The method according to one of claims 8 to 12, **characterised in that** at the stage of application of the gluing composition an electrostatic charge (38) of a first polarity is generated on the surface of the part to be glued which is intended to receive the said composition, and the hot-melt self-gripping particles of the said gluing composition are polarized with an electrostatic charge (39) of opposite sign.

14. The method according to one of claims 8 to 13, **characterised in that** a gluing composition comprising predetermined proportions (F1, F2, F3) of hot-melt self-gripping particles with staged melting temperatures (T1, T2, T3) is used, and at the stage of hot pressing the temperature and/or the duration of the operation is determined in order to modulate the strength of the gluing.

15. The method according to one of claims 8 to 14, **characterised in that** at the end of the stage of application of the gluing composition, a hardening agent, which is capable of reaction with the hot-melt self-gripping particles during melting thereof, is applied thereto - in particular by spraying - in a manner such that the reversibility of the melting is limited.

16. The method according to one of claims 8 to 15, **characterised in that** in the stage of application of the gluing composition, a hardening agent, which is capable of reaction with the hot-melt self-gripping particles during melting thereof in a manner such that the reversibility of the melting is limited, is mixed with this.
